(19) **Europäisches Patentamt**
**European Patent Office**
**Office européen des brevets**

(11)  **EP 3 939 024 B1**

(12)  **EUROPEAN PATENT SPECIFICATION**

(45) Date of publication and mention
of the grant of the patent:
**24.09.2025  Bulletin 2025/39**

(21) Application number: **19918954.9**

(22) Date of filing: **12.03.2019**

(51) International Patent Classification (IPC):
*G08G 1/00 (2006.01)*    *B60W 30/165 (2020.01)*
*H04W 4/46 (2018.01)*    *H04W 4/44 (2018.01)*
*H04W 84/00 (2009.01)*    *H04W 76/00 (2018.01)*
*H04W 4/08 (2009.01)*    *H04W 76/14 (2018.01)*
*H04W 92/18 (2009.01)*    *H04B 7/155 (2006.01)*

(52) Cooperative Patent Classification (CPC):
**G08G 1/22; H04W 4/08; H04W 4/44; H04W 4/46;**
**H04W 76/14;** H04W 76/40; H04W 84/005;
H04W 92/18

(86) International application number:
**PCT/CN2019/077773**

(87) International publication number:
**WO 2020/181480 (17.09.2020 Gazette 2020/38)**

(54) **CASCADED CONNECTION TECHNOLOGY FOR VEHICLE PLATOONS**

KASKADIERTE VERBINDUNGSTECHNOLOGIE FÜR ELEKTRONISCHE DEICHSELN

TECHNOLOGIE DE CONNEXION EN CASCADE POUR PELOTONS DE VÉHICULES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**19.01.2022  Bulletin 2022/03**

(73) Proprietor: **INTEL Corporation**
**Santa Clara, CA 95054 (US)**

(72) Inventors:
• **LI, Fei**
**Shanghai 200240 (CN)**
• **YANG, Wenlong**
**Shanghai 201611 (CN)**
• **ZUO, Jiao**
**Shanghai 200241 (CN)**
• **LIU, Chuansheng**
**Shanghai 200235 (CN)**

• **LIU, Changcheng**
**Shanghai 200241 (CN)**
• **LI, Zhuangzhi**
**Shanghai 200241 (CN)**
• **HAN, Zhen**
**Shanghai 200241 (CN)**

(74) Representative: **Viering, Jentschura & Partner**
**mbB**
**Patent- und Rechtsanwälte**
**Am Brauhaus 8**
**01099 Dresden (DE)**

(56) References cited:
CN-A- 106 843 210    CN-A- 108 682 144
CN-A- 108 845 570    US-A1- 2013 179 056
US-A1- 2017 158 196    US-A1- 2018 188 746
US-B1- 6 356 820

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## TECHNICAL FIELD

Embodiments generally relate to vehicle platoons. More particularly, embodiments relate to cascaded connection technology for vehicle platoons.

## BACKGROUND

Vehicle platooning is a technique to organize highway traffic into groups of close-following vehicles. The lead vehicle is generally operated by a human driver, whereas the following vehicles are operated by an autonomous driving system. In such a case, the lead vehicle might broadcast driving instructions to the following vehicles, control participation (e.g., joining, departing) in the platoon, and so forth. The communication range of the lead vehicle may be limited depending on the height of the vehicle, packet error rate constraints, and type of wireless link being used. Indeed, relatively low-height vehicles such as sedans typically have communication ranges that in turn limit the maximum size of the platoon. While improving antenna designs may increase the communication range, such a solution may involve costly changes to the exterior design of the vehicle and may have a negative impact on aerodynamics (e.g., drag). Moreover, other information transfer solutions such as wireless relaying may increase latency, which gives rise to safety concerns.
The document US6356820B1 discloses a method and system to allow the merging of platoons.

## BRIEF DESCRIPTION OF THE DRAWINGS

The various advantages of the embodiments will become apparent to one skilled in the art by reading the following specification and appended claims, and by referencing the following drawings, in which:

FIG. 1 is a comparative plan view of an example of multiple conventional platoons and a cascaded platoon according to an embodiment;
FIG. 2 is a flowchart of an example of a method of operating a lead vehicle according to an embodiment;
FIG. 3 is an illustration of an example of a roadside message communication according to an embodiment;
FIG. 4 is a plan view of an example of an ad-hoc group according to an embodiment;
FIG. 5 is a flowchart of an example of a method of establishing a direct communications link according to an embodiment;
FIG. 6 is a flowchart of an example of a method of discontinuing a direct communications link according to an embodiment;
FIG. 7 is a plan view of an example of a throughput measurement according to an embodiment;
FIG. 8 is a block diagram of an example of a performance-enhanced vehicle according to an embodiment; and
FIG. 9 is an illustration of an example of a semiconductor apparatus according to an embodiment.

## DESCRIPTION OF EMBODIMENTS

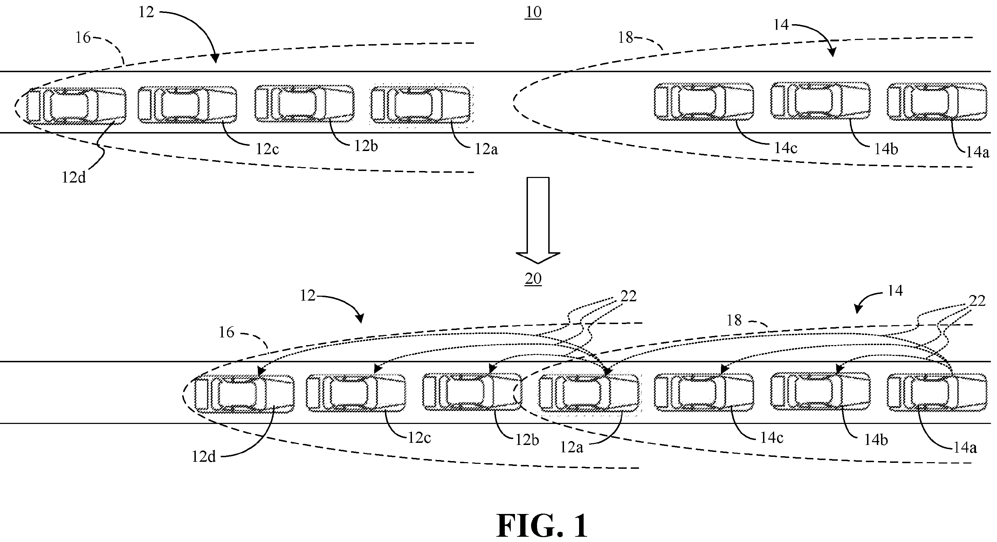

Turning now to FIG. 1, a conventional scenario 10 is shown in which a first platoon 12 (12a-12d, e.g., convoy, caravan) of vehicles travels from left to right. In an embodiment, a first lead vehicle 12a (e.g., Leading F vehicle) is manually operated by a human, whereas remaining vehicles 12b-12d are operated in an autonomous mode. In the illustrated example, the first lead vehicle 12a has a communication range 16 (e.g., control channel/CCH range) that enables the first lead vehicle 12a to broadcast operation instructions (e.g., driving instructions such as speed, acceleration, deceleration, lane change instructions, etc., and/or platoon participation instructions such as join requests, leave requests, etc.) to the remaining vehicles 12b-12d. Thus, all occupants of the remaining vehicles 12b-12d may rest, enjoy entertainment, etc., as if they were passengers of the first lead vehicle 12a. Additionally, the following distance between the vehicles of the first platoon 12 may be relatively small to improve highway throughput. Of particular note, however, is that the illustrated first platoon 12 has reached a maximum size limit due to constraints imposed by the communication range 16.
Similarly, a second platoon 14 (14a-14c) is positioned ahead of the first platoon 12 and also travels from left to right. In an embodiment, a second lead vehicle 14a (e.g., Leading P vehicle) is manually operated by a human, whereas remaining vehicles 14b, 14c are operated in an autonomous mode. In the illustrated example, the second lead vehicle 14a has a communication range 18 that enables the second lead vehicle 14a to broadcast operation instructions to the remaining vehicles 14b, 14c, so that the occupants of the remaining vehicles 14b, 14c may rest, enjoy entertainment, etc., as if they were passengers of the second lead vehicle 14a. In the conventional scenario 10, however, highway throughput is suboptimal because the first platoon 12 is separate from the second platoon 14 and maintains a relatively large following distance for safety concerns.

By contrast, in an enhanced scenario 20, the first lead vehicle 12a automatically determines based on the communication range 18 of the second lead vehicle 14a that a direct communications link can be established between the first lead vehicle 12a and the second lead vehicle 14a. Accordingly, the first lead vehicle 12a joins the second platoon 14 so that the first platoon 12 and the second platoon 14 constitute a "cascaded" platoon. In such a case, the second lead vehicle 14a broadcasts operation instructions 22 to the remaining vehicles 14b, 14c and the first lead vehicle 12a, which transitions into the autonomous mode while the cascaded platoon is in existence. The first lead vehicle 12a then broadcasts the operation instructions 22 to the remaining vehicles 12b-12d in the first platoon 12.

The enhanced scenario 20 therefore enables larger platoons to be formed, which increases highway throughput, increases fuel economy, reduces emissions, and improves the riding experience. Additionally, latency is minimized because the number of "hops" from the second lead vehicle 14a to the rest of the cascaded platoon is at most two. Latency may be further reduced by enabling the first lead vehicle 12a to control participation in the first platoon 12 locally at the first lead vehicle 12a and without the involvement of the second lead vehicle 14a. The enhanced scenario 20 also eliminates any need to modify antennas or vehicle exteriors. Accordingly, cost savings may be achieved and a negative impact on aerodynamics is avoided.

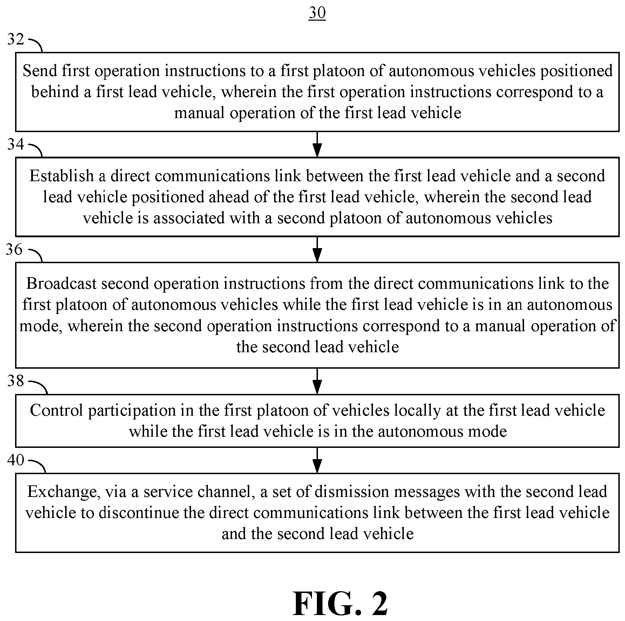

FIG. 2 shows a method 30 of operating a lead vehicle. The method 30 may generally be implemented in a lead vehicle such as, for example, the first lead vehicle 12a (FIG. 1), already discussed. More particularly, the method 30 may be implemented as one or more modules in a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality hardware logic using circuit technology such as, for example, application specific integrated circuit (ASIC), complementary metal oxide semiconductor (CMOS) or transistor-transistor logic (TTL) technology, or any combination thereof.

For example, computer program code to carry out operations shown in the method 30 may be written in any combination of one or more programming languages, including an object oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Illustrated processing block 32 sends first operation instructions (e.g., driving instructions) to a first platoon of autonomous vehicles positioned behind the first lead vehicle, wherein the first operation instructions correspond to a manual operation of the first lead vehicle. A direct communications link may be established at block 34 between the first lead vehicle and a second lead vehicle positioned ahead of the first lead vehicle, wherein the second lead vehicle is associated with a second platoon of autonomous vehicles. As will be discussed in greater detail, block 34 may include detecting the second lead vehicle based on a roadside broadcast message and exchanging, via a service channel (SCH), a set of connection messages with the second lead vehicle to establish the direct communications link. In an embodiment, block 34 also includes confirming the range suitability of the direct communications link based on the roadside message. Block 34 may also include using adaptive cruise control (ACC) to reduce the distance between the first lead vehicle and the last vehicle in the second platoon (e.g., a gap of 35m at a velocity of 35m/s).

Block 36 provides for broadcasting second operation instructions from the direct communications link to the first platoon of autonomous vehicles while the first lead vehicle is in the autonomous mode. In the illustrated example, the second operation instructions correspond to the manual operation of the second lead vehicle. In an embodiment, the first operation instructions and the second operation instructions are driving instructions sent via a control channel. Block 38 may control participation in the first platoon of vehicles locally at the first lead vehicle while the first lead vehicle is in the autonomous mode. Such an approach may further reduce latency, as already noted. Illustrated block 40 exchanges, via a service channel, a set of dismission messages with the second lead vehicle to discontinue the direct communications link between the first lead vehicle and the second lead vehicle.

The illustrated method 30 therefore enables larger platoons to be formed, which increases highway throughput, increases fuel economy, reduces emissions, and improves the riding experience. Additionally, latency is minimized because the number of hops from the second lead vehicle to the rest of the cascaded platoon is at most two. Latency may be further reduced by enabling the first lead vehicle to control participation in the first platoon locally at the first lead vehicle and without the involvement of the second lead vehicle. The method 30 also eliminates any need to modify antennas or vehicle exteriors. Accordingly, cost savings may be achieved and a negative impact on aerodynamics may be avoided. In one example, the messages described herein are carried through a vehicular ad-hoc network (VANET) and/or wireless access for vehicular environments (WAVE) basic service set (WBSS).

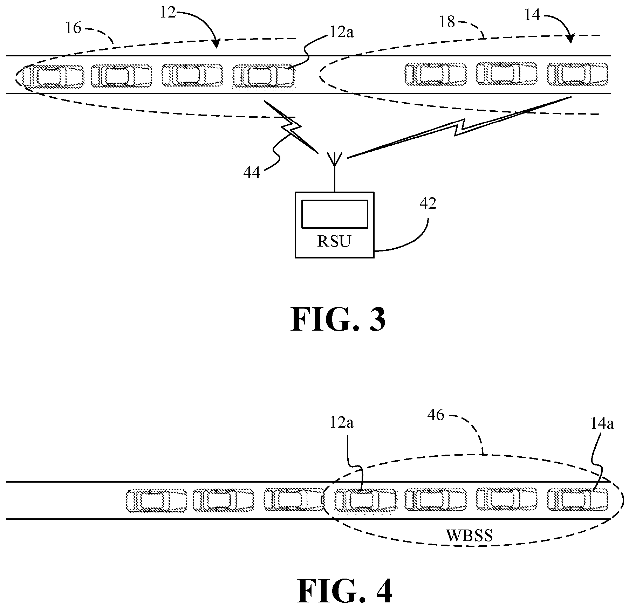

FIG. 3 demonstrates that a roadside unit (RSU) 42 may listen to the CCH every few tens or hundreds of milliseconds to detect safety messages. In an embodiment, the RSU 42 collects information regarding the communication range 18, current size, and/or supported size of the second platoon 14 and sends that information in a roadside broadcast message 44 to the first platoon 12. Thus, the first lead vehicle 12a may use the roadside broadcast message 44 to confirm range suitability of the direct communications link before initiating the formation of the cascaded platoon. Initiation of the cascaded platoon may also be conditioned on the suitability of traffic conditions, the lack of ongoing platoon participation changes, and so forth.

FIG. 4 demonstrates that an ad-hoc group 46 (e.g., WBSS) may be initiated through a service advertisement message (SAM) that the second lead vehicle 14a transmits on the CCH. In such a case, the second lead vehicle 14a is the service provider and the first lead vehicle 12a is the service user. In an embodiment, the SAM includes SCH information to be used when exchanging connection messages and dismission messages. Table I below shows an example of messages that may be exchanged over the SCH and the CCH.

Table I: Messages in Cascaded Platoons

| Message ID | Message | Source | Destination | Channel | Hop (S: single hop, M: multi-hop) |
|---|---|---|---|---|---|
| 1 | Connection Request | 1st lead vehicle | 2nd lead vehicle | SCH | S |
| 2 | Connection Approval | 2nd lead vehicle | 1st lead vehicle | SCH | S |
| 3 | Connection Done | 1st lead vehicle | 2nd lead vehicle | SCH | S |
| 4 | Connection Rejected | 2nd lead vehicle | 1st lead vehicle | SCH | S |
| 5 | Dismission Request | 1st/2nd lead vehicle | 2nd/1st lead vehicle | SCH | S |
| 6 | Dismission Approval | 2nd/1st lead vehicle | 1st/2nd lead vehicle | SCH | S |
| 7 | Dismission Done | 1st lead vehicle | 2nd lead vehicle | SCH | S |
| 8 | Dismission Rejected | 2nd/1st lead vehicle | 1st/2nd lead vehicle | SCH | S |
| 9 | Operation Instruction | 2nd lead vehicle | 1st lead vehicle<br><br>Platoon vehicle | CCH | S*<br>M* |
| 10 | Internal Platoon Maneuver Messages | Platoon vehicle<br>1st lead vehicle<br>2nd lead vehicle | Platoon vehicle<br>1st lead vehicle<br>2nd lead vehicle | SCH | S** |

In Table I, S* is an operating instruction message transferred in a single hop from the second lead vehicle to following vehicles in the second platoon; M* is an operating instruction message transferred by multi-hop from the second lead vehicle to following vehicles in the first platoon; and S** are internal platoon maneuver messages (e.g., for platoon participation changes such as join/leave) transferred in a single hop from following vehicles of a platoon and are handled by the respective lead vehicle (e.g., either the first lead vehicle or the second lead vehicle).

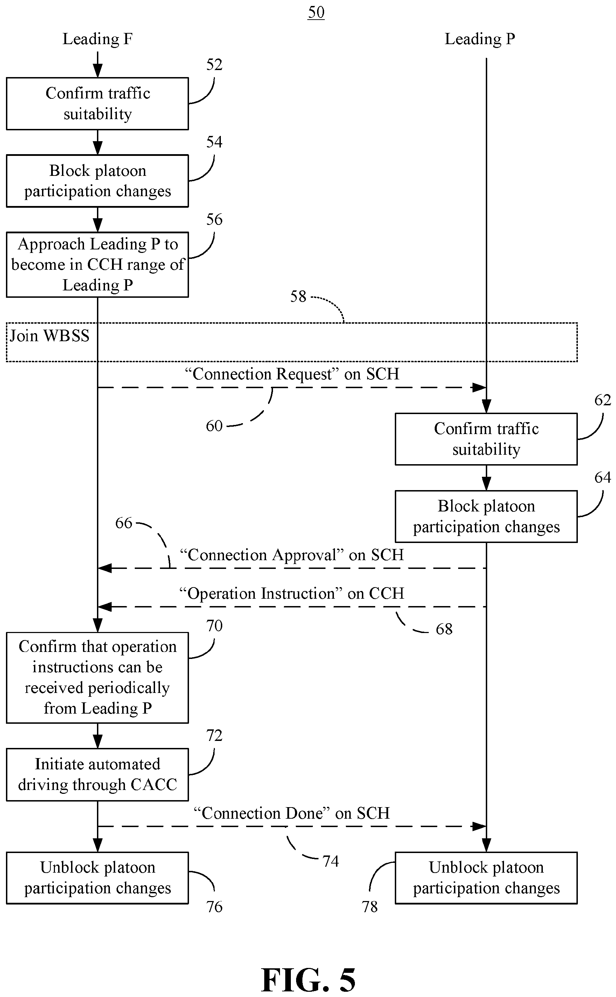

FIG. 5 shows a method 50 of establishing a direct communications link. The method 50 may generally be implemented in lead vehicles such as, for example, the first lead vehicle 12a (FIG. 1, e.g., "Leading F") and the second lead vehicle 14a (FIG. 1, e.g., "Leading P"), already discussed. More particularly, the method 50 may be implemented as one or more modules in a set of logic instructions stored in a machine- or computer-readable storage medium such as RAM, ROM, PROM, firmware, flash memory, etc., in configurable logic such as, for example, PLAs, FPGAs, CPLDs, in fixed-functionality hardware logic using circuit technology such as, for example, ASIC, CMOS or TTL technology, or any combination thereof.

Illustrated processing block 52 confirms traffic suitability at the Leading F vehicle. In an embodiment, block 52 includes checking platoon size, ensuring that no platoon participation changes are ongoing, and so forth. Platoon participation changes are blocked/prevented at processing block 54, wherein block 56 causes the Leading F vehicle to come within the CCH range of the Leading P vehicle. In block 58, the Leading P vehicle and the Leading F vehicle join a WBSS. The Leading F vehicle may send a connection request message 60 on the SCH (e.g., via a direct communications link) to the Leading P, which confirms traffic suitability at block 62 in response to the message 60. Additionally, the Leading P vehicle may block platoon participation changes at processing block 64. The illustrated Leading P vehicle acknowledges the request message 60 via a connection approval message 66 on the SCH.

The Leading P may also periodically issue operation instructions 68 to the Leading F vehicle on the CCH. The Leading F vehicle confirms at block 70 that the operation instructions 68 can be received periodically from the Leading P vehicle and transitions to autonomous mode (e.g., initiates automated driving cooperative adaptive cruise control/CACC) at block 72. The Leading F vehicle then sends a connection done message 74 to the Leading P vehicle on the SCH. Additionally, processing block 76 unblocks/permits platoon participation changes at the Leading F vehicle and processing block 78 unblocks platoon participation changes at the Leading P vehicle.

Exceptions

If it is determined at block 52 that the traffic conditions are not suitable, the Leading F vehicle may abort the procedure and check the status again later. Additionally, if it is determined at block 62 that the traffic conditions are not suitable, the Leading P vehicle may send a connection rejected message (not shown) to the Leading F vehicle to restart the procedure. In an embodiment, if it is determined at block 70 that the operation instructions 68 cannot or have not been received, the Leading F vehicle may decelerate and maintain a safe distance from the platoon ahead. Moreover, the Leading P vehicle may treat a failure to receive the connection done message 74, as a failed establishment of the cascaded connection.

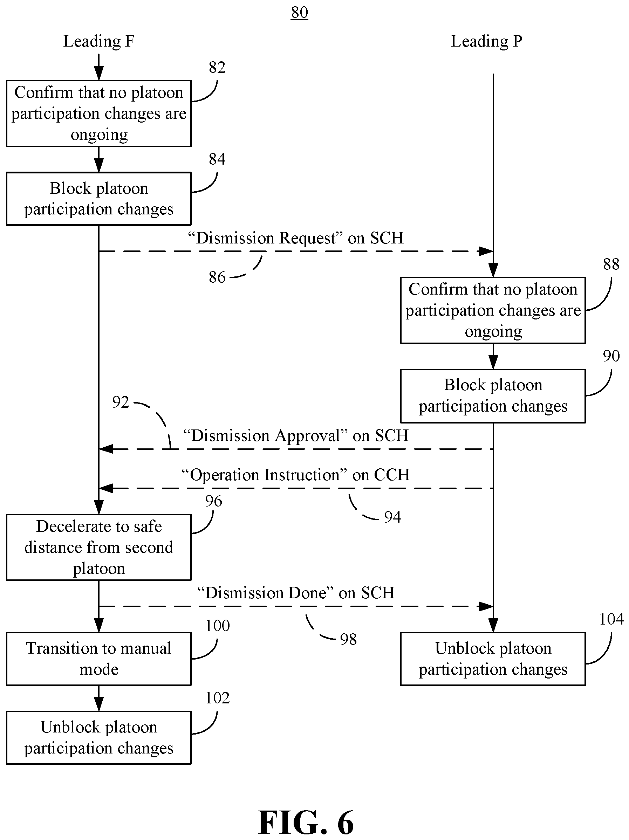

FIG. 6 shows a method 80 of discontinuing a direct communications link. The method 80 may generally be implemented in lead vehicles such as, for example, the first lead vehicle 12a (FIG. 1, e.g., "Leading F") and the second lead vehicle 14a (FIG. 1, e.g., "Leading P"), already discussed. More particularly, the method 80 may be implemented as one or more modules in a set of logic instructions stored in a machine- or computer-readable storage medium such as RAM, ROM, PROM, firmware, flash memory, etc., in configurable logic such as, for example, PLAs, FPGAs, CPLDs, in fixed-functionality hardware logic using circuit technology such as, for example, ASIC, CMOS or TTL technology, or any combination thereof.

Illustrated processing block 82 confirms that no platoon participation changes are ongoing, wherein platoon participation changes are blocked at processing block 84. The Leading F vehicle may send a dismission request 86 to the Leading P vehicle, which confirms that no platoon participation changes are ongoing at block 88 in response to the dismission request 86.

The Leading P vehicle also blocks platoon participation changes at processing block 90. The Leading P vehicle may then send a dismission approval message 92 on the SCH to the Leading F vehicle, followed by an operation instruction 94 on the CCH to the Leading F vehicle. In an embodiment, the operation instruction 94 includes a deceleration request or command. Upon receiving the operation instruction 94, the Leading F vehicle decelerates to a safe distance from the second platoon at block 96. Additionally, the illustrated Leading F vehicle sends a dismission done message 98 on the SCH to the Leading P vehicle. Block 100 may transition the Leading F vehicle to manual mode (e.g., permitting a human to drive the Leading F vehicle). Additionally, processing block 102 unblocks platoon participation changes at the Leading F vehicle and processing block 104 unblocks platoon participation changes at the Leading P vehicle.

Exceptions

If it is determined at block 82 that platoon participation changes are ongoing, the Leading F vehicle checks again several or tens of milliseconds later to start the dismission again. Additionally, if it is determined at block 88 that platoon participation changes are ongoing, the Leading P vehicle rejects the dismission request 86 by sending a dismission rejection message (not shown) on the SCH to the Leading F vehicle. In such a case, the Leading F vehicle would start the dismission again later. Moreover, even if the Leading P vehicle does not receive the dismission done message 98, the Leading P vehicle may assume that the dismission is complete.

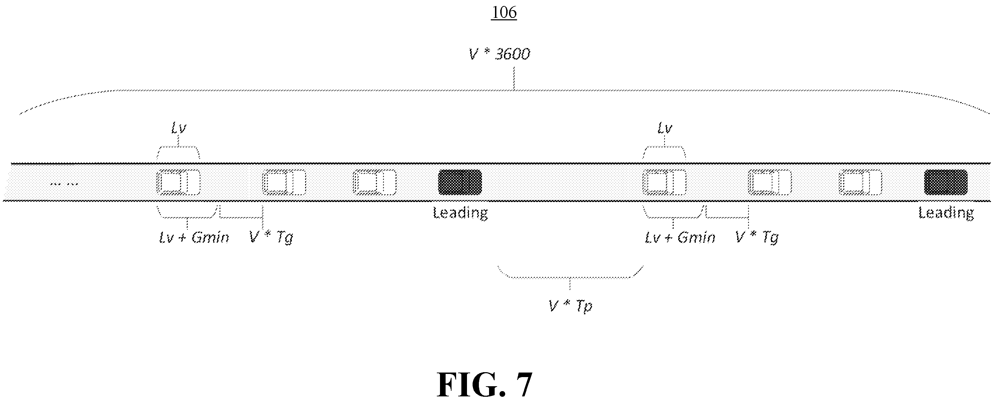

FIG. 7 shows a throughput measurement 106 in which the throughput Q (*veh/h*) of single platoon lane can be estimated through the following formula (1). The meaning, unit and reference value of symbols are listed in Table II.

$$Q = \frac{V * 3600}{L_v} * \frac{N * L_v}{V * T_g * (N - 1) + N * (L_v + G_{min}) + V * T_p} \ (1)$$

Table II

| Symbol | Meaning | Unit | Ref. Value |
|--------|---------|------|------------|
| $N$ | Platoon size, number of vehicles in one platoon | - | 4 |
| $V$ | Velocity of vehicle, meters per second | m/s | 30 |
| $L_v$ | Length of vehicle, meters | m | 5 |
| $T_g$ | Time gap of intra-platoon vehicle, second | s | *0.55* |

(continued)

| Symbol | Meaning | Unit | Ref. Value |
|---|---|---|---|
| $G_{min}$ | Gap minimum for single vehicle, meter | m | 2 |
| $T_p$ | Time gap of inter-platoon, second | s | 3.5 |
| $Q$ | Vehicles per hour on a single platoon lane | veh/h | 2367 |

Assuming that the CCH range is 100m, then the platoon size will be 4. Without a cascaded connection of vehicle platoon, the throughput is 2367 vehicles per hour. With a cascaded connection of two vehicle platoons, the platoon size is equally increased to seven, and the throughput is 2988 vehicles per hour, which means that the throughput is improved by 26%. With a cascaded connection of four vehicle platoons, the platoon size is equally increased to thirteen, and the throughput is almost improved by about 50% to 3563 vehicles per hour.

Latency Reduction to 1/(N-1)

With cascaded platoons, the latency of information flow from the leader to the farthest follower is significantly reduced (e.g., close to 1/(N-1) for the farthest follower) relative to a pure predecessor-following platoon approach (e.g., wireless relay with N being the number of vehicles in single platoon of a cascaded group). In the following example, the number of hops for information flow is reduced from six to two, and latency will be reduced accordingly.

In the case of a predecessor-following topology with one leader and six followers, there are six hops from leader to the last follower.

In the cascaded connection technology described herein, there are only two hops from the Leading P vehicle (e.g., second lead vehicle) to the last follower (i.e., the leftmost vehicle).

Generally speaking, for a platoon group of (M-1)*(N-1) + N vehicles (M, the number of platoons; N, the size of single platoon), there are M hops from the leading P to the last follower. By contrast, for a predecessor-following topology of (M-1)*(N-1) + N vehicles, there are N*M-M hops from the leader to the last follower. Therefore, the number of hops is reduced to M/(M*N-M), close to 1/(N-1), compared to the predecessor-following topology. Accordingly, the latency is also reduced close to 1/(N-1) of that of predecessor-following topology.

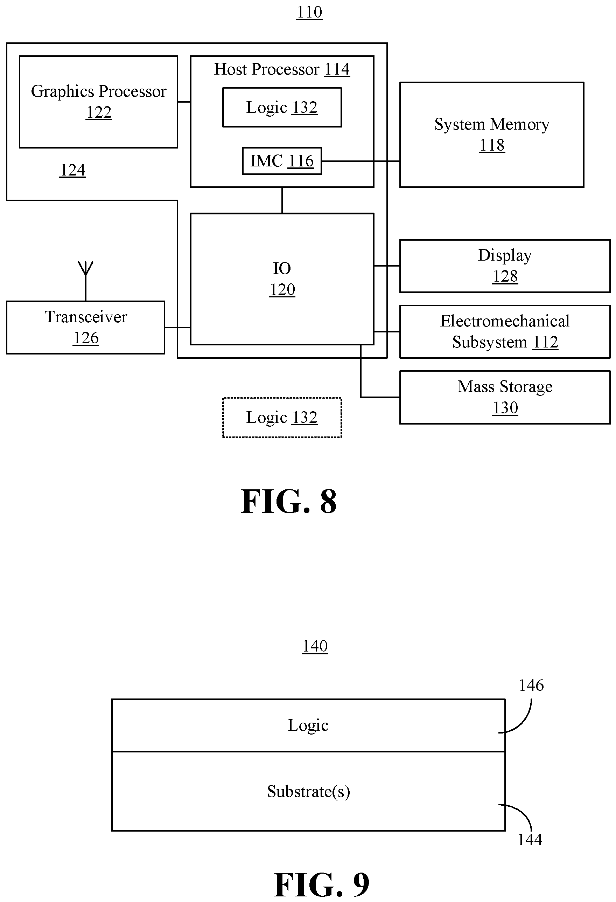

Turning now to FIG. 8, a performance-enhanced vehicle 110 (e.g., first lead vehicle, Leading F vehicle) is shown. In the illustrated example, the vehicle 110 includes an electromechanical subsystem 112 (e.g., drive train, steering, navigation, onboard controller, event data recorder/EDR) and a host processor 114 (e.g., central processing unit/CPU with one or more processor cores) having an integrated memory controller (IMC) 116 that is coupled to a system memory 118. The illustrated vehicle 110 also includes an input output (IO) module 120 implemented together with the host processor 114 and a graphics processor 122 on a semiconductor die 124 as a system on chip (SoC). The IO module 120 communicates with, for example, a transceiver 126 (e.g., capable of wirelessly maintaining vehicle-to-vehicle/V2V links and vehicle-to-infrastructure/V2I links via an antenna), a display 128, the electromechanical subsystem 112, and mass storage 130 (e.g., hard disk drive/HDD, optical disk, solid state drive/SSD, flash memory).

In one embodiment, the transceiver 126 communicates via dedicated short-range communication (DSRC) and/or VANET, using an IEEE (Institute of Electrical and Electronics Engineers) 802.11p protocol at the physical layer. In such a case, a 75MHz band might be allocated around the 5.9GHz frequency, with the 75MHz band including one CCH, six SCHs and one 5MHz reserved channel. The transceiver 126 may also include an on board unit (OBU) that listens to the CCH every few tens or hundreds of milliseconds to detect safety messages.

The host processor 114 may include logic 132 (e.g., logic instructions, configurable logic, fixed-functionality hardware logic, etc., or any combination thereof) to perform one or more aspects of the method 30 (FIG. 2), the method 50 (FIG. 5), and/or the method 80 (FIG. 6), already discussed. Thus, the logic 132 may send, via the transceiver 126, first operation instructions to a first platoon of autonomous vehicles positioned behind the vehicle 110, wherein the first operation instructions correspond to a manual operation of the vehicle 110. The logic 132 may also establish, via the transceiver 126, a direct communications link between the vehicle 110 and a second lead vehicle positioned ahead of the vehicle 110. In an embodiment, the logic 132 broadcasts, via the transceiver 126, second operation instructions from the direct communications link to the first platoon of autonomous vehicles while the vehicle 110 is in an autonomous mode, wherein the second operation instructions correspond to a manual operation of the second lead vehicle.

The vehicle 110 may therefore be considered performance-enhanced to the extent that it enables larger platoons to be formed, which increases highway throughput, increases fuel economy, reduces emissions, and improves the riding experience. Additionally, latency is minimized because the number of hops from the vehicle 110 to the rest of the cascaded platoon is at most two. Latency may be further reduced by enabling the vehicle 110 to control participation in the first platoon locally at the first lead vehicle and without the involvement of the second lead vehicle. The logic 132 also eliminates any need to modify antennas or vehicle exteriors. Accordingly, cost savings may be achieved and a negative impact on aerodynamics may be avoided. Although the logic 132 is illustrated in the host processor 114, the logic 132 may be located elsewhere in the vehicle 110. For example, the logic 132 might include instructions that are retrieved from the system memory 118 and/or the mass storage 130.

FIG. 9 shows a semiconductor apparatus 140 (e.g., chip, die, package). The illustrated apparatus 140 includes one or more substrates 144 (e.g., silicon, sapphire, gallium arsenide) and logic 146 (e.g., transistor array and other integrated circuit/IC components) coupled to the substrate(s) 144. In an embodiment, the logic 146 implements one or more aspects of the method 30 (FIG. 2), the method 50 (FIG. 5), and/or the method 80 (FIG. 6), already discussed. Thus, the logic 146 may send first operation instructions to a first platoon of autonomous vehicles positioned behind a first lead vehicle, wherein the first operation instructions correspond to a manual operation of the first lead vehicle. The logic 146 may also establish a direct communications link between the first lead vehicle and a second lead vehicle positioned ahead of the first lead vehicle. In an embodiment, the logic 146 broadcasts second operation instructions from the direct communications link to the first platoon of autonomous vehicles while the first lead vehicle is in an autonomous mode, wherein the second operation instructions correspond to a manual operation of the second lead vehicle.

The logic 146 may be implemented at least partly in configurable logic or fixed-functionality hardware logic. In one example, the logic 146 includes transistor channel regions that are positioned (e.g., embedded) within the substrate(s) 144. Thus, the interface between the logic 146 and the substrate(s) 144 may not be an abrupt junction. The logic 146 may also be considered to include an epitaxial layer that is grown on an initial wafer of the substrate(s) 174.

Thus, technology described herein significantly improves traffic throughput and reduces latency in the flow of information from the leader to the farthest follower. Moreover, the technology requires no change in antenna or vehicle exterior design.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of" may mean any combination of the listed terms. For example, the phrases "one or more of A, B or C" may mean A, B, C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the invention is defined by the appended claims and should not be so limited since other modifications will become apparent to the skilled practitioner upon a study of the drawings, specification, and following claims.

## Claims

1. A vehicle subsystem at a first vehicle (12a) comprising:

an antenna;
a transceiver (126) coupled to the antenna;
a processor (114) coupled to the transceiver (126); and
a memory (118) including a set of instructions, which when executed by the processor (114), cause the vehicle subsystem to:

send first operation instructions to a first platoon of autonomous vehicles (12) positioned behind the first lead vehicle (12a), wherein the first operation instructions correspond to a manual operation of the first lead vehicle (12a),

automatically determine based on a communication range (18) of second lead vehicle (14a) positioned ahead of the first lead vehicle (12a), wherein the second lead vehicle (14a) is to be associated with a second platoon of autonomous vehicles (14),

that a direct communication link can be established between the first lead vehicle (12a) and the second lead vehicle (14a);

establish the direct communication link between first lead vehicle (12a) and the second lead vehicle (14a);

join the second platoon (14) so that the first platoon (12) and the second platoon (14) constitute a cascaded platoon;

transition to autonomous mode;

receive second operation instructions from the second lead vehicle (14a), wherein the second operation instructions correspond to a manual operation of the second lead vehicle (14a) and

broadcast second operation instructions from the direct communications link to the first platoon of autonomous vehicles (12).

2. The vehicle subsystem of claim 1, wherein the instructions, when executed, cause the first lead vehicle (12a) to control participation in the first platoon of vehicles (12) locally at the first lead vehicle (12a) while the first lead vehicle (12a) is in the autonomous mode.

3. The vehicle subsystem of claim 1, wherein the instructions, when executed, cause the first lead vehicle (12a) to:

detect the second lead vehicle (14a) based on a roadside broadcast message; and
exchange, via a service channel, a set of connection messages with the second lead vehicle (14a) to establish the direct communications link.

4. The vehicle subsystem of claim 3, wherein the instructions, when executed, cause the first lead vehicle (12a) to confirm a range suitability of the direct communications link based on the roadside message.

5. The vehicle subsystem of any one of claims 1 to 4, wherein the first operation instructions and the second operation instructions are to be sent via a control channel.

6. The vehicle subsystem of claim 1, wherein the instructions, when executed, cause the first lead vehicle (12a) to exchange, via a service channel, a set of dismission messages with the second lead vehicle (14a) to discontinue the direct communications link between the first lead vehicle (12a) and the second lead vehicle (14a).

7. A method of operating a first lead vehicle, comprising:

sending first operation instructions to a first platoon of autonomous vehicles (12) positioned behind the first lead vehicle (12a), wherein the first operation instructions correspond to a manual operation of the first lead vehicle (12a);

automatically determining based on a communication range (18) of a second lead vehicle (14a) positioned ahead of the first lead vehicle (12a), wherein the second lead vehicle (14a) is associated with a second platoon of autonomous vehicles (14); that a direct communication link can be established between the first lead vehicle (12a) and the second lead vehicle (14a);

establishing the direct communication link between the first lead vehicle (12a) and the second lead vehicle (14a);

joining the second platoon (14) so that the first platoon (12) and the second platoon (14) constitute a cascaded platoon;

transitioning to autonomous mode;

receiving second operation instructions from the second lead vehicle (14a) wherein the second operation instructions correspond to a manual operation of the second lead vehicle (14a) and
broadcasting second operation instructions from the direct communications link to the first platoon of autonomous vehicles (12).

8. The method of claim 7, further including controlling participation in the first platoon of vehicles (12) locally at the first lead vehicle (12a) while the first lead vehicle (12a) is in the autonomous mode.

9. The method of claim 7, wherein establishing the direct communications link includes:

    detecting the second lead vehicle (14a) based on a roadside broadcast message; and
    exchanging, via a service channel, a set of connection messages with the second lead vehicle (14a).

10. The method of claim 9, further including confirming a range suitability of the direct communications link based on the roadside broadcast message.

11. The method of any one of claims 7 to 10, wherein the first operation instructions and the second operation instructions are sent via a control channel.

12. The method of claim 7, further including exchanging, via a service channel, a set of dismission messages with the second lead vehicle (14a) to discontinue the direct communications link between the first lead vehicle (12a) and the second lead vehicle (14a).

13. A machine-readable storage including machine-readable instructions, which when executed, implement a method as claimed in any preceding claims 7 to 12.

14. A computer program, comprising:
    logic instructions that when executed in a computer causes the computer to perform the methods according to any one of claims 7-12.


**Patentansprüche**

1. Fahrzeugteilsystem an einem ersten Fahrzeug (12a), das Folgendes umfasst:

    eine Antenne;
    einen Sendeempfänger (126), der mit der Antenne gekoppelt ist;
    einen Prozessor (114), der mit dem Sendeempfänger (126) gekoppelt ist; und
    einen Speicher (118), der einen Satz von Anweisungen aufweist, die, wenn sie durch den Prozessor (114) ausgeführt werden, das Fahrzeugteilsystem zu Folgendem veranlassen:

    Senden erster Betriebsanweisungen an eine erste Kolonne von autonomen Fahrzeugen (12), die hinter dem ersten Führungsfahrzeug (12a) positioniert sind, wobei die ersten Betriebsanweisungen einem manuellen Betrieb des ersten Führungsfahrzeugs (12a) entsprechen, automatisches Bestimmen, basierend auf einer Kommunikationsreichweite (18) eines zweiten Führungsfahrzeugs (14a), das vor dem ersten Führungsfahrzeug (12a) positioniert ist, wobei das zweite Führungsfahrzeug (14a) einer zweiten Kolonne von autonomen Fahrzeugen (14) zugeordnet werden soll, dass eine direkte Kommunikationsverbindung zwischen dem ersten Führungsfahrzeug (12a) und dem zweiten Führungsfahrzeug (14a) hergestellt werden kann;
    Herstellen der direkten Kommunikationsverbindung zwischen dem ersten Führungsfahrzeug (12a) und dem zweiten Führungsfahrzeug (14a);
    Anschließen an die zweite Kolonne (14), so dass die erste Kolonne (12) und die zweite Kolonne (14) eine kaskadenförmige Kolonne bilden;
    Übergehen in einen autonomen Modus;
    Empfangen zweiter Betriebsanweisungen von dem zweiten Führungsfahrzeug (14a), wobei die zweiten Betriebsanweisungen einem manuellen Betrieb des zweiten Führungsfahrzeugs (14a) entsprechen, und
    Rundsenden zweiter Betriebsanweisungen von der direkten Kommunikationsverbindung an die erste Kolonne von autonomen Fahrzeugen (12).

**2.** Fahrzeugteilsystem nach Anspruch 1, wobei die Anweisungen bei Ausführung das erste Führungsfahrzeug (12a) dazu veranlassen, eine Teilnahme an der ersten Kolonne von Fahrzeugen (12) lokal an dem ersten Führungsfahrzeug (12a) zu steuern, während sich das erste Führungsfahrzeug (12a) in dem autonomen Modus befindet.

**3.** Fahrzeugteilsystem nach Anspruch 1, wobei die Anweisungen bei Ausführung das erste Führungsfahrzeug (12a) zu Folgendem veranlassen:

Detektieren des zweiten Führungsfahrzeugs (14a) basierend auf einer straßenseitigen Rundsendenachricht; und

Austauschen, über einen Dienstkanal, eines Satzes von Verbindungsnachrichten mit dem zweiten Führungsfahrzeug (14a), um die direkte Kommunikationsverbindung herzustellen.

**4.** Fahrzeugteilsystem nach Anspruch 3, wobei die Anweisungen bei Ausführung das erste Führungsfahrzeug (12a) dazu veranlassen, eine Reichweiteneignung der direkten Kommunikationsverbindung basierend auf der straßenseitigen Nachricht zu bestätigen.

**5.** Fahrzeugteilsystem nach einem der Ansprüche 1 bis 4, wobei die ersten Betriebsanweisungen und die zweiten Betriebsanweisungen über einen Steuerkanal gesendet werden sollen.

**6.** Fahrzeugteilsystem nach Anspruch 1, wobei die Anweisungen bei Ausführung das erste Führungsfahrzeug (12a) dazu veranlassen, über einen Dienstkanal einen Satz von Beendigungsnachrichten mit dem zweiten Führungsfahrzeug (14a) auszutauschen, um die direkte Kommunikationsverbindung zwischen dem ersten Führungsfahrzeug (12a) und dem zweiten Führungsfahrzeug (14a) zu trennen.

**7.** Verfahren zum Betreiben eines ersten Führungsfahrzeugs, das Folgendes umfasst:

Senden erster Betriebsanweisungen an eine erste Kolonne von autonomen Fahrzeugen (12), die hinter dem ersten Führungsfahrzeug (12a) positioniert sind, wobei die ersten Betriebsanweisungen einem manuellen Betrieb des ersten Führungsfahrzeugs (12a) entsprechen;

automatisches Bestimmen, basierend auf einer Kommunikationsreichweite (18) eines zweiten Führungsfahrzeugs (14a), das vor dem ersten Führungsfahrzeug (12a) positioniert ist, wobei das zweite Führungsfahrzeug (14a) einer zweiten Kolonne von autonomen Fahrzeugen (14) zugeordnet ist; dass eine direkte Kommunikationsverbindung zwischen dem ersten Führungsfahrzeug (12a) und dem zweiten Führungsfahrzeug (14a) hergestellt werden kann;

Herstellen der direkten Kommunikationsverbindung zwischen dem ersten Führungsfahrzeug (12a) und dem zweiten Führungsfahrzeug (14a);

Anschließen an die zweite Kolonne (14), so dass die erste Kolonne (12) und die zweite Kolonne (14) eine kaskadenförmige Kolonne bilden;

Übergehen in einen autonomen Modus;

Empfangen zweiter Betriebsanweisungen von dem zweiten Führungsfahrzeug (14a), wobei die zweiten Betriebsanweisungen einem manuellen Betrieb des zweiten Führungsfahrzeugs (14a) entsprechen, und

Rundsenden zweiter Betriebsanweisungen von der direkten Kommunikationsverbindung an die erste Kolonne von autonomen Fahrzeugen (12).

**8.** Verfahren nach Anspruch 7, das ferner Steuern einer Teilnahme an der ersten Kolonne von Fahrzeugen (12) lokal an dem ersten Führungsfahrzeug (12a), während sich das erste Führungsfahrzeug (12a) in dem autonomen Modus befindet, aufweist.

**9.** Verfahren nach Anspruch 7, wobei das Herstellen der direkten Kommunikationsverbindung Folgendes aufweist:

Detektieren des zweiten Führungsfahrzeugs (14a) basierend auf einer straßenseitigen Rundsendenachricht; und

Austauschen, über einen Dienstkanal, eines Satzes von Verbindungsnachrichten mit dem zweiten Führungsfahrzeug (14a).

**10.** Verfahren nach Anspruch 9, das ferner Bestätigen einer Reichweiteneignung der direkten Kommunikationsverbindung basierend auf der straßenseitigen Rundsendenachricht aufweist.

**11.** Verfahren nach einem der Ansprüche 7 bis 10, wobei die ersten Betriebsanweisungen und die zweiten Betriebsanweisungen über einen Steuerkanal gesendet werden.

**12.** Verfahren nach Anspruch 7, das ferner Austauschen, über einen Dienstkanal, eines Satzes von Beendigungsnachrichten mit dem zweiten Führungsfahrzeug (14a), um die direkte Kommunikationsverbindung zwischen dem ersten Führungsfahrzeug (12a) und dem zweiten Führungsfahrzeug (14a) zu trennen, aufweist.

**13.** Maschinenlesbarer Speicher, der maschinenlesbare Anweisungen aufweist, die bei Ausführung ein Verfahren nach einem der Ansprüche 7 bis 12 implementieren.

**14.** Computerprogramm, das Folgendes umfasst:
Logikanweisungen, die bei Ausführung in einem Computer den Computer veranlassen, die Verfahren nach einem der Ansprüche 7-12 durchzuführen.

**Revendications**

**1.** Sous-système de véhicule, au niveau d'un premier véhicule (12a), comprenant :

une antenne ;
un émetteur-récepteur (126) couplé à l'antenne ;
un processeur (114) couplé à l'émetteur-récepteur (126) ; et
une mémoire (118) incluant un ensemble d'instructions, qui, lorsqu'elles sont exécuté par le processeur (114), amènent le sous-système de véhicule à :

envoyer des premières instructions de fonctionnement à une premier convoi de véhicules autonomes (12) positionnés derrière le premier véhicule de tête (12a), dans lequel les premières instructions de fonctionnement correspondent à un fonctionnement manuel du premier véhicule de tête (12a), déterminer automatiquement, sur la base d'une portée de communication (18) d'un second véhicule de tête (14a) positionné devant le premier véhicule de tête (12a), dans lequel le second véhicule de tête (14a) doit être associé à un second convoi de véhicules autonomes (14), qu'une liaison de communication directe peut être établie entre le premier véhicule de tête (12a) et le second véhicule de tête (14a) ;
établir la liaison de communication directe entre le premier véhicule de tête (12a) et le second véhicule de tête (14a) ;
rejoindre le second convoi (14) de telle sorte que le premier convoi (12) et le second convoi (14) constituent un convoi en cascade ;
passer à un mode autonome ;
recevoir des secondes instructions de fonctionnement en provenance du second véhicule de tête (14a), dans lequel les secondes instructions de fonctionnement correspondent à un fonctionnement manuel du second véhicule de tête (14a), et
diffuser les secondes instructions de fonctionnement, depuis la liaison de communication directe, au premier convoi de véhicules autonomes (12).

**2.** Sous-système de véhicule de la revendication 1, dans lequel les instructions, lorsqu'elles sont exécutées, amènent le premier véhicule de tête (12a) à commander la participation au premier convoi de véhicules (12) localement, au niveau du premier véhicule de tête (12a), alors que le premier véhicule de tête (12a) est dans le mode autonome.

**3.** Sous-système de véhicule de la revendication 1, dans lequel les instructions, lorsqu'elles sont exécutées, amènent le premier véhicule de tête (12a) à :

détecter le second véhicule de tête (14a) sur la base d'un message de diffuseur en bord de route ; et
échanger, par l'intermédiaire d'un canal de service, un ensemble de messages de connexion avec le second véhicule de tête (14a) pour établir la liaison de communication directe.

**4.** Sous-système de véhicule de la revendication 3, dans lequel les instructions, lorsqu'elles sont exécutées, amènent le premier véhicule de tête (12a) à confirmer une adéquation de portée de la liaison de communication directe sur la base du message en bord de route.

**5.** Sous-système de véhicule de l'une quelconque des revendications 1 à 4, dans lequel les premières instructions de fonctionnement et les secondes instructions de fonctionnement doivent être envoyées par l'intermédiaire d'un canal de commande.

**6.** Sous-système de véhicule de la revendication 1, dans lequel les instructions, lorsqu'elles sont exécutées, amènent le premier véhicule de tête (12a) à échanger, par l'intermédiaire d'un canal de service, un ensemble de messages de révocation avec le second véhicule de tête (14a) pour discontinuer la liaison de communication directe entre le premier véhicule de tête (12a) et le second véhicule de tête (14a).

**7.** Procédé de fonctionnement d'un premier véhicule de tête, comprenant les faits :

d'envoyer des premières instructions de fonctionnement à un premier convoi de véhicules autonomes (12) positionnés derrière le premier véhicule de tête (12a), dans lequel les premières instructions de fonctionnement correspondent à un fonctionnement manuel du premier véhicule de tête (12a) ;
de déterminer automatiquement, sur la base d'une portée de communication (18) d'un second véhicule de tête (14a) positionné devant le premier véhicule de tête (12a), dans lequel le second véhicule de tête (14a) est associé à un second convoi de véhicules autonomes (14), qu'une liaison de communication directe peut être établie entre le premier véhicule de tête (12a) et le second véhicule de tête (14a) ;
d'établir la liaison de communication directe entre le premier véhicule de tête (12a) et le second véhicule de tête (14a) ;
de rejoindre le second convoi (14) de telle sorte que le premier convoi (12) et le second convoi (14) constituent un convoi en cascade ;
de passer à un mode autonome ;
de recevoir des secondes instructions de fonctionnement en provenance du second véhicule de tête (14a), dans lequel les secondes instructions de fonctionnement correspondent à un fonctionnement manuel du second véhicule de tête (14a) et
de diffuser des secondes instructions de fonctionnement, depuis la liaison de communication directe, au premier convoi de véhicules autonomes (12).

**8.** Procédé de la revendication 7, incluant en outre le fait de commander la participation au premier convoi de véhicules (12) localement, au niveau du premier véhicule de tête (12a), alors que le premier véhicule de tête (12a) est dans le mode autonome.

**9.** Procédé de la revendication 7, dans lequel le fait d'établir la liaison de communication directe inclut les faits :

de détecter le second véhicule de tête (14a) sur la base d'un message de diffuseur en bord de route ; et
d'échanger, par l'intermédiaire d'un canal de service, un ensemble de messages de connexion avec le second véhicule de tête (14a).

**10.** Procédé de la revendication 9, incluant en outre le fait de confirmer une adéquation de portée de la liaison de communication directe sur la base du message de diffuseur en bord de route.

**11.** Procédé de l'une quelconque des revendications 7 à 10, dans lequel les premières instructions de fonctionnement et les secondes instructions de fonctionnement sont envoyées par l'intermédiaire d'un canal de commande.

**12.** Procédé de la revendication 7, incluant en outre le fait d'échanger, par l'intermédiaire d'un canal de service, un ensemble de messages de révocation avec le second véhicule de tête (14a) pour discontinuer la liaison de communication directe entre le premier véhicule de tête (12a) et le second véhicule de tête (14a).

**13.** Stockage lisible par machine incluant des instructions lisibles par machine, qui lorsqu'elles sont exécutées, mettent en œuvre un procédé tel que revendiqué dans une quelconque revendication précédentes 7 à 12.

**14.** Programme d'ordinateur, comprenant :
des instructions logiques qui, lorsqu'elles sont exécutées dans un ordinateur, amènent l'ordinateur à réaliser les procédés selon l'une quelconque des revendications 7 à 12.

FIG. 1

<u>30</u>

32

Send first operation instructions to a first platoon of autonomous vehicles positioned behind a first lead vehicle, wherein the first operation instructions correspond to a manual operation of the first lead vehicle

34

Establish a direct communications link between the first lead vehicle and a second lead vehicle positioned ahead of the first lead vehicle, wherein the second lead vehicle is associated with a second platoon of autonomous vehicles

36

Broadcast second operation instructions from the direct communications link to the first platoon of autonomous vehicles while the first lead vehicle is in an autonomous mode, wherein the second operation instructions correspond to a manual operation of the second lead vehicle

38

Control participation in the first platoon of vehicles locally at the first lead vehicle while the first lead vehicle is in the autonomous mode

40

Exchange, via a service channel, a set of dismission messages with the second lead vehicle to discontinue the direct communications link between the first lead vehicle and the second lead vehicle

# FIG. 2

**FIG. 3**

**FIG. 4**

## 50

Leading F                                    Leading P

Confirm traffic suitability — 52

Block platoon participation changes — 54

Approach Leading P to become in CCH range of Leading P — 56

58 ┄┄

Join WBSS

"Connection Request" on SCH

60 —

Confirm traffic suitability — 62

Block platoon participation changes — 64

66 ⌐

"Connection Approval" on SCH

"Operation Instruction" on CCH

— 68

Confirm that operation instructions can be received periodically from Leading P — 70

Initiate automated driving through CACC — 72

"Connection Done" on SCH

— 74

Unblock platoon participation changes — 76

Unblock platoon participation changes

78

# FIG. 5

80

Leading F                      Leading P

82

Confirm that no platoon participation changes are ongoing

84

Block platoon participation changes

"Dismission Request" on SCH

86

88

Confirm that no platoon participation changes are ongoing

90

Block platoon participation changes

92

"Dismission Approval" on SCH

"Operation Instruction" on CCH

96                94

Decelerate to safe distance from second platoon

"Dismission Done" on SCH

100            98

Transition to manual mode

104

Unblock platoon participation changes

102

Unblock platoon participation changes

## FIG. 6

**FIG. 7**

110

| Graphics Processor 122 | Host Processor 114 |
| | Logic 132 |

124

IMC 116 ── System Memory 118

Transceiver 126 ── IO 120 ── Display 128

Electromechanical Subsystem 112

Logic 132

Mass Storage 130

# FIG. 8

140

146

Logic

Substrate(s)

144

# FIG. 9

**EP 3 939 024 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6356820 B1